Europäisches Patentamt

European Patent Office

Office européen des brevets

(11) Publication number: **0 635 822 A2**

(19)

(12) **EUROPEAN PATENT APPLICATION**

(21) Application number: **94111195.7**

(22) Date of filing: **18.07.94**

(51) Int. Cl.6: **G11B 5/39**, //G11B5/596

(30) Priority: **20.07.93 JP 178689/93**

(43) Date of publication of application:
**25.01.95 Bulletin 95/04**

(84) Designated Contracting States:
**DE FR GB**

(71) Applicant: **SONY CORPORATION**
**7-35 Kitashinagawa 6-chome**
**Shinagawa-ku**
**Tokyo 141 (JP)**

(72) Inventor: **Sato, Jin, c/o Sony Corporation**
**7-35, Kitashinagawa 6-chome**
**Shinagawa-ku,**

Tokyo (JP)
Inventor: **Saito, Norio, c/o Sony Corporation**
**7-35, Kitashinagawa 6-chome**
**Shinagawa-ku,**
**Tokyo (JP)**
Inventor: **Narisawa, Hiroaki, c/o Sony**
**Corporation**
**7-35, Kitashinagawa 6-chome**
**Shinagawa-ku,**
**Tokyo (JP)**

(74) Representative: **TER MEER - MÜLLER -**
**STEINMEISTER & PARTNER**
**Mauerkircherstrasse 45**
**D-81679 München (DE)**

(54) **Magnetoresistive thin-film magnetic head.**

(57) A magnetoresistive thin-film magnetic head is disclosed, which includes a magnetoresistive element having magnetoresistance effect, the magnetoresistive element being exposed to a recording medium facing surface, and upper and lower shield magnetic bodies formed of soft magnetic layers, the upper and lower shield magnetic bodies magnetically shielding the magnetoresistive element with a non-magnetic layer held between them in a direction of film thickness, one or both of the upper and lower shield magnetic bodies having at least width of a portion thereof exposed to the recording medium facing surface, not smaller than an effective track width and not greater than four times a track pitch. In this case, in one or both of the upper and lower shield magnetic bodies, length in the direction of depth determined by the width may be greater than formation length of the magnetoresistive element. In one or both of the upper and lower shield magnetic bodies, the width is not smaller than the effective track width and not greater than the track pitch, and the length in the direction of depth determined by the width is not smaller than 9% of maximum recording wavelength.

FIG.7

## BACKGROUND OF THE INVENTION

This invention relates to a magnetoresistive thin-film magnetic head employing a magnetoresistive film having its resistivity varied in response to the recording magnetic field of a magnetic recording medium and detecting a change in resistance of the magnetoresistive film as a reproduction output voltage.

As the hard disk drive unit has recently become increasingly smaller in size and greater in capacity, a 2.5-inch hard disk drive unit, for example, is largely demanded for application to portable computers represented by personal computers of notebook type.

In such a small-size hard disk drive unit, the medium velocity is reduced depending upon the diameter of the disk. Therefore, With a conventional inductive magnetic head having medium-velocity-dependent reproduction output, the reproduction output is lowered, disturbing enlargement of capacity.

However, a magnetoresistance effect magnetic head which detects, as a reproduction output voltage, a change in resistance of a magnetoresistive element having its resistivity varied in accordance with the magnetic field does not have the medium-velocity-dependent reproduction output, thus allowing a high reproduction output to be produced even at a low medium velocity. For this reason, the magnetoresistance effect magnetic head is noted as a magnetic head for realizing a greater capacity with the small-size hard disk. The magnetoresistive element is hereinafter referred to simply as an MR head.

Conventionally, in order to realize the MR head as a magnetic head for the hard disk drive unit, a magnetoresistive thin-film magnetic head in which a thin-film MR element is sandwiched by a lower shield core and an upper shield core as magnetic paths in reproduction is formed on a slider member. The magnetoresistive thin-film magnetic head is hereinafter referred to simply as an MR thin-film head.

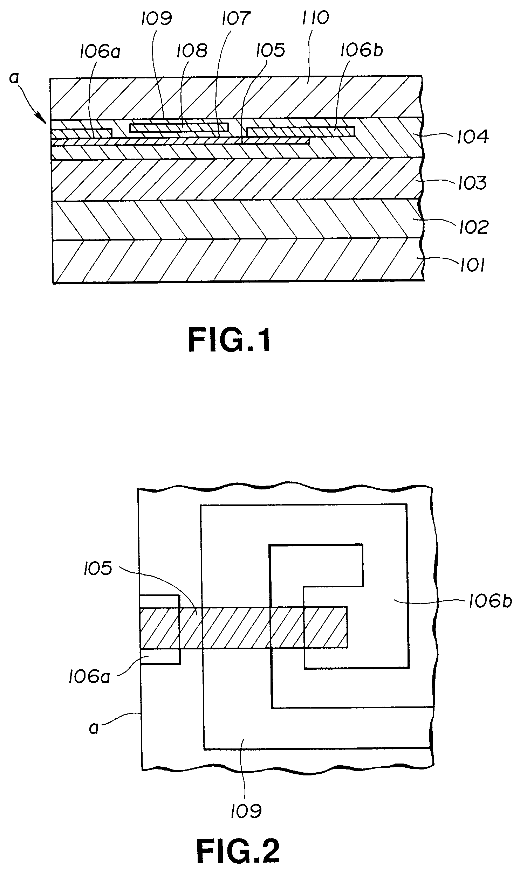

In further detail, a vertical MR thin-film head, for example, includes a non-magnetic substrate 101, an insulation layer 102, a soft magnetic film as a lower shield magnetic body 103 and an insulation layer 104 are stacked in this order from the bottom, as shown in Figs.1 and 2. On the insulation layer 104, an MR element 105 is arranged with its longitudinal direction perpendicular to a magnetic recording facing surface (head surface a) and with its one end surface exposed to the head surface a. In addition, a front-end electrode 106a and a rear-end electrode 106b for supplying sense currents to both ends of the MR element 105 are formed.

After an insulation layer 107 is stacked on the entire surface including the MR element 105, the front-end electrode 106a and the rear-end electrode 106b, a bias conductor 108 is formed, longitudinally traversing the underlying MR element 105. Then, an insulation layer 109 and a soft magnetic film as an upper shield magnetic body 110 are sequentially stacked on the entire surface. The conventional MR thin-film head is thus formed. In the example shown in Figs.1 and 2, the rear-end electrode 106b is serially connected to the bias conductor 108.

With the MR thin-film head having the structure in which the MR element 105 is held between the upper and lower shield magnetic bodies 110, 103, recording density dependence of the reproduction output can be improved, compared with other MR head lacking the upper and lower shield magnetic bodies 110, 103.

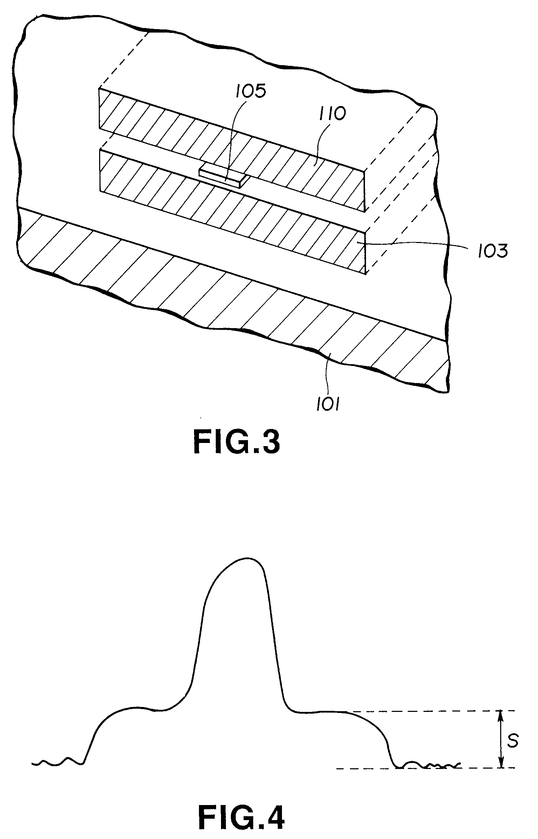

Meanwhile, in the conventional vertical MR thin-film head, for example, the upper and lower shield magnetic bodies 110, 103 magnetically shielding the MR element 105 are formed in parallel to face each other, and both portions exposed to the head surface a of the upper and lower shield magnetic bodies 110, 103 have width of 100 plus tens of $\mu$m, as shown in Fig.3.

In this case, of the tracks recorded in the recording medium, not less than 15 tracks other than tracks for reproduction from the recording medium fall within the width of the upper and lower shield magnetic bodies 110, 103.

In principle, signal magnetic fields from 15 tracks are to be shielded by the shield magnetic bodies. Eventually, however, the signal magnetic fields for the 15 tracks within the width of the shield magnetic bodies will leak toward the MR element, appearing in reproduction signals as a crosstalk component S, as shown in Fig.4.

There is a risk that the presence of the crosstalk component S prevents a reduction in the track pitch and affects the phase margin where the track recording density is high and the output level is low, thus deteriorating the S/N ratio of the original signal component. Particularly in the hard disk drive unit, when a servo signal and a tracking signal are taken out from the recording medium surface with the MR thin-film head, the crosstalk component S is superposed on the signals, deteriorating the quality of the servo signal and the tracking signal.

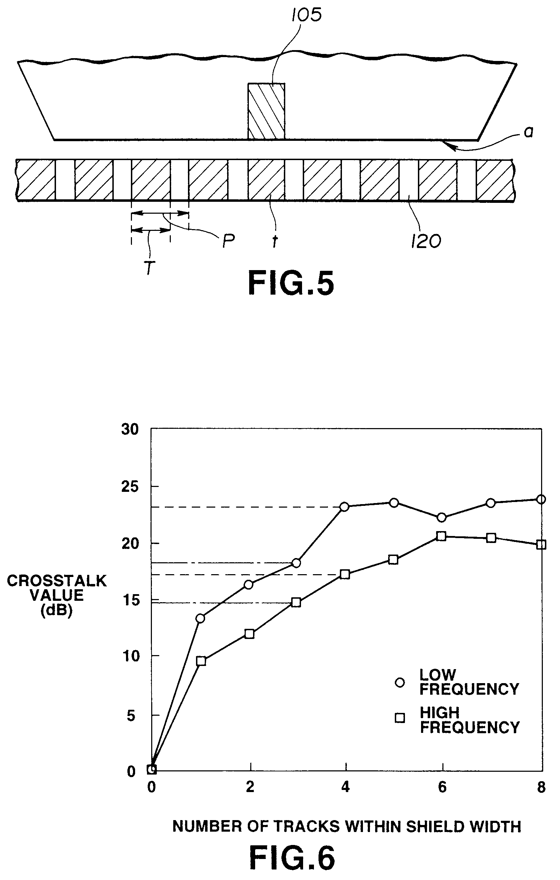

In an experiment, which will now be described, it was examined how the crosstalk value changes in accordance with the number of recording tracks t which fall within the width of the upper and lower shield magnetic bodies 110, 103, of the tracks t formed in a recording medium 120, as shown in Fig.5. The track pitch and the effective track width are denoted by P and T, respectively. The results of this experiment are shown in Fig.6. From the results of the experiment, it is found that an increase in the number of the tracks within the width of the shield magnetic body by one causes the crosstalk value to increase at a high rate of change for the number of recording tracks up to 4, and that the crosstalk value continues to increase at a lower rate of change for the number of tracks more than 4.

Thus, in the conventional MR thin-film head, since the upper and lower shield magnetic bodies 110, 103 have the width of 100 plus tens of $\mu$m, not less than 15 tracks other than the target tracks exist within the width, causing the crosstalk component to be superposed on the original signal to be outputted. Consequently, the S/N ratio of reproduction signals is deteriorated, and reliability of the servo signals is lowered.

## SUMMARY OF THE INVENTION

In view of the above-described status of the art, it is an object of the present invention to provide a magnetoresistive thin-film magnetic head by which it is possible to reduce the crosstalk component superposed on the original signal component to be outputted and to improve the S/N ratio of the reproduction signals and reliability of the servo signal.

According to the present invention, there is provided a magnetoresistive thin-film magnetic head having a magnetoresistive film having resistivity varied in response to a recording magnetic field from a magnetic recording medium. The magnetoresistive thin-film magnetic head of the present invention includes a magnetoresistive element having magnetoresistance effect, which is exposed to a recording medium facing surface, and upper and lower shield magnetic bodies formed of soft magnetic layers, which magnetically shield the magnetoresistive element with a non-magnetic layer held between them in a direction of film thickness. In the magnetoresistive thin-film magnetic head of the present invention, one or both of the upper and lower shield magnetic bodies have at least width of a portion thereof exposed to the recording medium facing surface, not smaller than an effective track width and not greater than four times a track pitch.

In this case, in one or both of the upper and lower shield magnetic bodies, length in the direction of depth determined by the width may be greater than formation length of the magnetoresistive element.

Also, in one or both of the upper and lower shield magnetic bodies, the width may be not smaller than the effective track width and not greater than the track pitch, and the length in the direction of depth determined by the width may be not smaller than 9% of maximum recording wavelength.

In the magnetoresistive thin-film magnetic head according to the present invention, as at least the width of the portion exposed to the recording medium facing surface in one or both of the upper and lower shield magnetic bodies is not smaller than the effective track width and not greater than four times the track pitch, the number of tracks within the width, particularly tracks other than the tracks for reproduction, can be reduced.

Since the above-mentioned width is caused to be not greater than four times the track pitch, the maximum number of tracks included within the width is 4. In this case, if the number of tracks within the width is less than 4, the crosstalk value rapidly decreases, as shown in Fig.6. Accordingly, with the above-described structure, the crosstalk component from the tracks other than the tracks for reproduction can be significantly reduced.

## BRIEF DESCRIPTION OF THE DRAWINGS

Fig.1 is a cross-sectional view showing essential portions of a conventional MR thin-film head.

Fig.2 is a plan view showing essential portions of the conventional MR thin-film head.

Fig.3 is a perspective view showing essential portions of the conventional MR thin-film head.

Fig.4 is a graph showing off-track properties of the conventional MR thin-film head.

Fig.5 is a plan view showing tracks which fall within the shield width of the conventional MR head in reading out information from a recording medium.

Fig.6 is a graph showing the relation between the number of tracks within the shield width and crosstalk.

Fig.7 is a perspective view showing essential portions of a first embodiment of a magnetoresistive thin-film magnetic head according to the present invention, hereinafter referred to the MR thin-film head of the first embodiment.

Fig.8 is a plan view showing essential portions of the MR thin-film magnetic head of the first embodiment, with an upper shield magnetic body excluded therefrom.

Fig.9 is a graph showing the relation between bit shift and crosstalk.

Fig.10 is a perspective view showing essential portions of a second embodiment of the magnetoresistive thin-film magnetic head according to the present invention, hereinafter referred to the MR thin-film head of the second embodiment.

Fig.11 is a plan view showing essential portions of the MR thin-film magnetic head of the second embodiment.

## DETAILED DESCRIPTION OF THE PREFERRED EMBODIMENTS

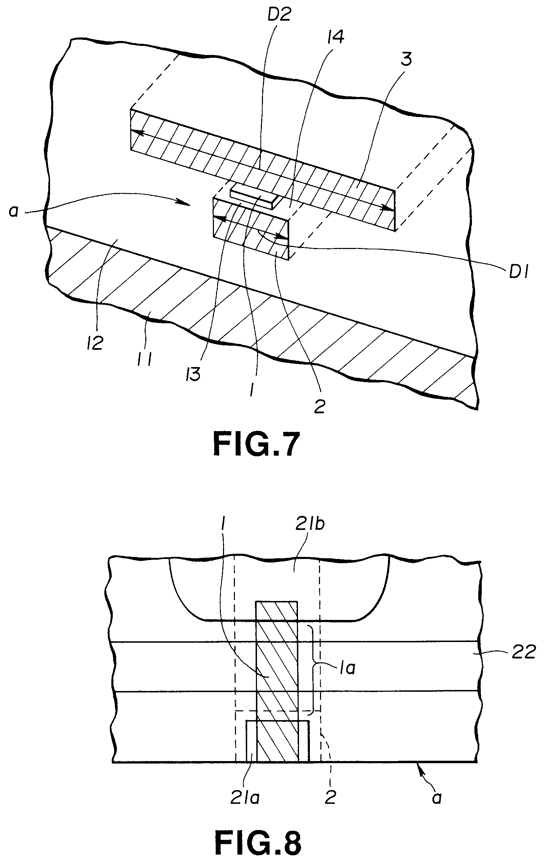

Two embodiments of the magnetoresistive thin-film magnetic head according to the present invention, which are referred to simply as the MR thin-film head of the first embodiment and the MR thin-film head of the second embodiment hereinafter, will now be described in detail with reference to Figs.7 through 11.

The MR thin-film head of the first embodiment has a magnetoresistive element 1, referred to simply as the MR element hereinafter, and a lower shield magnetic body 2 and an upper shield magnetic body 3 as magnetic paths in reproduction which hold the MR element 1 between them, as shown in Fig.7.

In further detail, a non-magnetic substrate 11, an insulation layer 12, the lower shield magnetic body 2 formed of a soft magnetic film of, for example, sendust, an insulation layer 13 of, for example, alumina forming a first reproduction gap and stacked on the upper shield magnetic body 2, the MR element 1 of, for example, an Fe-Ni film, an insulation layer 14, and the upper shield magnetic body 3 formed of a magnetic film of, for example, Fe-Ni and stacked on the insulation layer 14, are stacked in this order from the bottom, thus forming the MR thin-film head of the first embodiment.

In this MR thin-film head, the MR element 1 has its one longitudinal end exposed to a surface facing a magnetic recording medium, that is, a recording medium facing surface a, as shown in Fig.8. A forward end electrode 21a is formed in an end portion, that is, the forward end, on the side of the recording medium facing surface of the MR element 1 and a rear end electrode 21b of soft magnetic films is formed in a portion having a predetermined distance from the forward end. The forward end electrode 21a and the rear end electrode 21b are formed of soft magnetic films.

The forward end electrode 21a and the rear end electrode 21b are formed for the purpose of causing a sense current to flow in the longitudinal direction of the MR element 1, that is, in the direction orthogonal to the recording medium facing surface a. In the present embodiment, since the forward end electrode 21a is separately formed, flattening is carried out after formation of the insulation layer 14 so that the upper surface of the forward end electrode 21a is exposed and is then electrically connected to the upper shield magnetic body 3. Consequently, a second reproduction gap is formed by the forward end electrode 21a.

In the present MR thin-film head, an area of the MR element 1 between the rear end of the forward end electrode 21a and the forward end of the rear end electrode 21b exhibits magnetoresistance effect, and this area defines a sensor 1a of the MR element 1. On the sensor 1a of the MR element 1, a bias conductor 22 for applying a bias magnetic field to the MR element 1 is formed in a traversing manner above the MR element 1.

Also, in the present MR thin-film head of the first embodiment, the portion exposed to the recording medium facing surface a of the lower shield magnetic body 2 has a width D1, referred to simply as the shield width D1, smaller than the shield width D2 of the upper shield magnetic body 3, as shown in Fig.7.

Meanwhile, as the shield width of the shield magnetic body is narrowed, turbulence of anisotropy is generated. However, if a soft magnetic film of, for example, sendust having isotropic anisotropy and broad magnetic domain walls is used as the shield magnetic body, the turbulence of anisotropy can be avoided.

A technique for forming the lower shield magnetic body 2 having the narrower shield width D1 will now be explained. Before formation of the MR element, the soft magnetic film of sendust is formed on the non-magnetic substrate 11 by sputtering, with the insulation layer 12 provided between them. Then, the soft magnetic film is partly removed by ion etching, thus forming the lower shield magnetic body 2 of the narrower shield width D1.

In the first embodiment, the shield width D1 of the lower shield magnetic body 2 is caused to be not smaller than the effective track width and not greater than four times the track pitch, in consideration of the results of experiment as shown in Figs.5 and 6. Also, in the first embodiment, the lower shield magnetic body 2 is caused to have the length in the direction of depth of the portion determined by the shield width D1 which is greater than the formation length of the MR element.

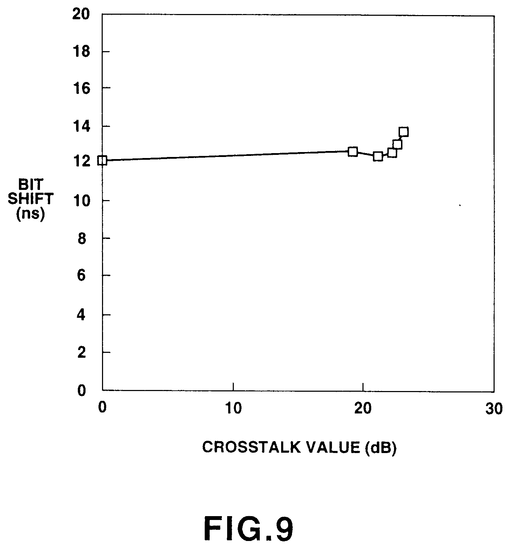

The relation between the bit shift and the crosstalk component is shown in Fig.9. As shown in Fig.9, the crosstalk component exceeding approximately 20 dB will affect the bit shift. As a result, differences are generated between information recorded in the medium and information reproduced with the MR thin-film head, disturbing output of accurate reproduction signals.

Consequently, it is necessary to restrict the crosstalk component to approximately 20 dB or less, in consideration of the effects on the bit shift. From the results of the experiment shown in Fig.5, it is found that the shield width of the lower shield magnetic body 2 not smaller than the effective track width and not greater than four times the track pitch, with the crosstalk value shown by a broken line, will cause the crosstalk component to be approximately 20 dB or less in reproducing high frequency signals. In addition, the shield width of the lower shield magnetic body 2 not smaller than the effective track width and not greater than three times the track pitch, with the crosstalk value shown by a dashed line, is preferred for restricting the crosstalk component to approximately 20 dB or less in reproducing low frequency signals.

Thus, in the MR thin-film head of the first embodiment, the shield width D2 of the upper shield magnetic body 3 is caused to be normal, and the shield width D1 of the lower shield magnetic body 2 is restricted to be not smaller than the effective track width and not greater than four times the track pitch, with the length in the direction of depth of the portion determined by the shield width D1 caused to be greater than the formation length of the MR element 1, in the portions exposed to the recording medium surface a of the upper and lower shield magnetic bodies 3, 2. Thus, the number of tracks within the shield width D1, particularly the tracks other than the tracks for reproduction, can be reduced.

Since the shield width D1 is caused to be not greater than four times the track pitch, the maximum number of tracks included within the shield width D1 is 4. In this case, if the number of tracks within the shield width D1 is 4 or less, the crosstalk value is rapidly lowered, as shown in Fig.6. Consequently, with the above-described structure, the crosstalk component from the tracks other than the tracks for reproduction can be significantly reduced.

Thus, in the MR thin-film head according to the first embodiment, as the crosstalk component from the tracks other than the tracks for reproduction is significantly reduced, the S/N ratio of reproduction signals and reliability of servo signals can be improved, and reproduction signals of a lower error rate and servo signals of less errors can be produced.

In addition, with the shield width D1 of the lower shield magnetic body 2 not smaller than the effective track width and not greater than four times the track pitch, the crosstalk component can be reduced by 5 dB or more compared with conventional technique, and the effects on the bit shift can also be reduced.

Meanwhile, in the first embodiment, the shield width D2 of the upper shield magnetic body 3 is at a conventional value while the shield width D1 of the lower shield magnetic body 2 is narrower, for the following reasons. That is, it is necessary to sputter and then anneal sendust as the component material of the shield magnetic body at 520°C for the sendust to have magnetic properties. In this case, if the lower shield magnetic body 2 is to have its shield width narrowed, it can be annealed as described above without affecting the MR element 1 yet to be formed. However, if the upper shield magnetic body 3 is annealed with its shield width D2 narrowed, the MR element 1 is simultaneously annealed, causing possible deterioration of reproduction properties of the MR element 1.

In the first embodiment, as only the width of the lower shield magnetic body 2 formed of sendust is caused to be narrower, it is annealed before formation of the MR element 1. Thus, effective annealing can be implemented without affecting properties of the MR element 1, thus producing the MR thin-film head exempt from deterioration of properties.

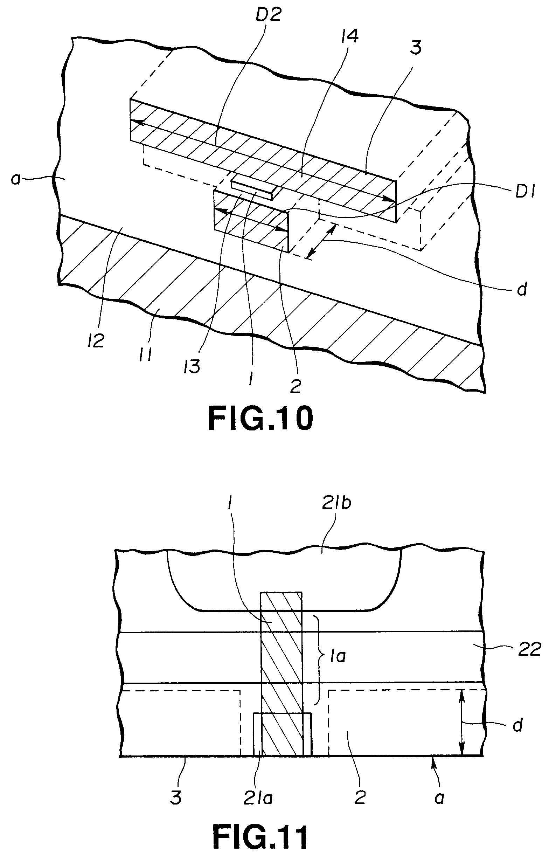

The second embodiment of the MR thin-film head will now be described with reference to Figs.10 and 11, in which parts corresponding to those in Figs.7 and 8 are denoted by the same reference numerals.

The MR thin-film head of the second embodiment, though having substantially the same structure as the MR thin-film head of the first embodiment, is different in that the shield width D1 of the lower shield magnetic body is caused to be not smaller than the effective track width and not greater than the track pitch and in that the length in the direction of depth from the recording medium facing surface a of the lower shield magnetic body, that is, recess width, is determined by a value d expressed as follows.

As in the first embodiment, it is necessary to reduce the crosstalk by 5 dB or more compared with the conventional technique in consideration of the effects on the bit shift, the recess width d is indicated by the following equation of spacing loss in which $\lambda_m$ represents the maximum recording wavelength.

$$Ls = 54d / \lambda_m \geq 5 \text{ (dB)}$$

Accordingly, the recess width d is expressed as

$$d \geq 0.09 \times \lambda_m$$

indicating that the recess d should be equal to or greater than 9% of the maximum recording wavelength.

Thus, in the MR thin-film head of the second embodiment, the shield width D2 of the upper shield magnetic body 3 is caused to be normal while the shield width D1 of the lower shield magnetic body 2 is caused to be not smaller than the effective track width and not greater than the track pitch, with the length or the recess width d in the direction of depth determined by the shield width D1 caused to be not smaller than 9% of the maximum recording wavelength, in the portions exposed to the recording medium facing surface a of the upper and lower shield magnetic bodies 2, 3. Therefore, as in the first embodiment, the crosstalk component from the tracks other than the tracks for reproduction can be significantly reduced. Consequently, the S/N ratio of reproduction signals and reliability of servo signals can be improved, and the reproduction signals of a lower error rate and servo signals of less errors can be produced.

In addition, the crosstalk component can be decreased by approximately 5 dB or more compared with the conventional technique, and the effects on the bit shift can also be reduced.

Also in the second embodiment, as only the shield width D1 of the lower shield magnetic body 2 formed of sendust is caused to be narrower, it is annealed before formation of the MR element 1. Thus, effective annealing can be implemented without affecting properties of the MR element 1, thus producing the MR thin-film head exempt from deterioration of properties.

It is to be understood that the MR thin-film head of the present invention is not limited to the above first and second embodiments, and that materials other than sendust, the narrower shield width of the upper shield magnetic body 3, or the narrower shield width both of the upper and lower shield magnetic bodies 2, 3 can be employed.

In the magnetoresistive thin-film magnetic head according to the present invention including the magnetoresistive element having magnetoresistance effect and exposed to the recording medium facing surface and the upper and lower shield magnetic bodies of soft magnetic layers magnetically shielding the magnetoresistive element with the non-magnetic layer between them in the direction of film thickness, at least the portion exposed to the recording medium facing surface of one or both of the upper and lower shield magnetic bodies has the width not smaller than the effective track width and not greater than four times the track pitch. Therefore, the crosstalk component superposed on the original signal component to be outputted can be reduced, and the S/N ratio of reproduction signals and reliability of servo signals can be improved.

In addition, in the magnetoresistive thin-film magnetic head according to the present invention, even though the width of the portion exposed to the recording medium facing surface is caused to be not smaller than the effective track width and not greater than the track pitch, with the length in the direction of depth determined by the width caused to be not smaller than 9% of the maximum recording wavelength, in one or both of the upper and lower shield magnetic bodies, the crosstalk component superposed on the original signal component to be outputted can be reduced, and the S/N ratio of reproduction signals and reliability of servo signals can be improved.

## Claims

1. A magnetoresistive thin-film magnetic head having a magnetoresistive film having resistivity varied in response to a recording magnetic field from a magnetic recording medium, the magnetoresistive thin-film magnetic head comprising:

   a magnetoresistive element having magnetoresistance effect, the magnetoresistive element being exposed to a recording medium facing surface;

   an upper shield magnetic body and a lower shield magnetic body both formed of soft magnetic layers, the upper and lower shield magnetic bodies magnetically shielding the magnetoresistive element with a non-magnetic layer formed between them in a direction of film thickness;

   one or both of the upper and lower shield magnetic bodies having at least width of a portion thereof exposed to the recording medium facing surface, equal to and greater than effective track width and equal to and smaller than four times a track pitch.

2. The magnetoresistive thin-film magnetic head as claimed in claim 1, wherein one or both of the upper and lower shield magnetic bodies have length in a direction of depth determined by the width, greater than formation length of the magnetoresistive element.

3. The magnetoresistive thin-film head as claimed in claim 1, wherein one or both of the upper and lower shield magnetic bodies has the width equal to and greater than the effective track width and equal to and smaller than the track pitch, and have the length in the direction of depth equal to and greater than 9% of maximum recording wavelength.

**FIG.1**

**FIG.2**

**FIG.3**

**FIG.4**

**FIG.5**

NUMBER OF TRACKS WITHIN SHIELD WIDTH

**FIG.6**

EP 0 635 822 A2

FIG.7

FIG.8

**FIG.9**

**FIG.10**

**FIG.11**